# EUROPÄISCHE PATENTSCHRIFT

(11) **EP 1 846 214 B1**
(45) Veröffentlichungstag und Bekanntmachung des Hinweises auf die Patenterteilung: **14.08.2013**
(21) Anmeldenummer: 06706480.8
(22) Anmeldetag: 30.01.2006
(51) Int. Cl.: B29C 45/14

(54) **VERFAHREN UND VORRICHTUNG ZUM ÜBERFüHREN EINES ETIKETTS IN EINE SPRITZGIESSFORM**
METHOD AND DEVICE FOR TRANSFERRING A LABEL TO AN INJECTION MOLD
PROCEDE ET DISPOSITIF POUR TRANSFERER UNE ETIQUETTE DANS UN MOULE D'INJECTION

(30) Priorität: 31.01.2005 DE 102005004396
(43) Veröffentlichungstag der Anmeldung: 24.10.2007
(73) Patentinhaber: HEKUMA GmbH, 85386 Eching (DE)
(72) Erfinder: JAAG, Armin, 74357 Bönnigheim (DE)
(74) Vertreter: Klingseisen, Franz
(86) Internationale Anmeldenummer: PCT/EP2006/000772
(87) Internationale Veröffentlichungsnummer: WO 2006/082006

(56) Entgegenhaltungen:
- DE-A1- 4 141 645
- US-A- 3 602 496
- PATENT ABSTRACTS OF JAPAN Bd. 2000, Nr. 20, 10. Juli 2001 (2001-07-10) -& JP 2001 062866 A (SAILOR PEN CO LTD:THE), 13. März 2001 (2001-03-13)

## Beschreibung

Die Erfindung betrifft ein Verfahren und eine Vorrichtung zum Überführen eines Etiketts in eine Spritzgießform, insbesondere bei einer im Wesentlichen zylindrischen Ausgestaltung des Spritzgussteils, auf dessen Außenumfang das Etikett positioniert werden soll.

Beim Spritzgießen von Bechern oder dergleichen Gegenständen hat die Spritzgießform üblicherweise eine Entformungsschräge bzw. ist die Form leicht konisch gestaltet mit von außen nach innen abnehmendem Innendurchmesser. Wenn in eine solche konische Spritzgießform ein Etikett eingelegt werden soll, das anschließend bei Ausbildung des Spritzgießgegenstandes hinterspritzt werden soll, kann ein ebenfalls konisch gestalteter Dorn, auf dem das Etikett zum Überführen angeordnet wird, derart in die Spritzgießform eingeführt werden, dass das Etikett auf dem Innenumfang der konischen Spritzgießform angedrückt wird. Wenn dagegen eine im Wesentlichen zylindrische Spritzgießform vorliegt, muss das Etikett vom Einlegedom auf den Innenumfang der Spritzgießform überführt werden. Hierbei ist es schwierig, das Etikett in die gewünschte Position zu bringen.

Aus JP 2001 062866 A ist ein Verfahren zum Überführen eines Etiketts in eine Spritzgießform unter Verwendung von zwei Einlegedomen bekannt, wobei ein Etikett z. B. aus einem Magazin oder von einem Stapel auf einen ersten Einlegedom überführt und auf diesem ausgerichtet wird, wonach das Etikett auf einen zweiten Einlegedorn überführt und durch diesen in die Spritzgießform eingeführt wird.

Aus DE 41 41 645 A1 ist ein Verfahren und eine Vorrichtung zum Herstellen eines Kunststoffbehälters mit einem Hüllfolien-Saughaltedorn bekannt, wobei ein konischer Saughaltedom zum Einführen einer darauf angebrachten Hüllfolie in eine Spritzgießform vorgesehen ist.

Aufgabe der Erfindung ist es, ein Verfahren und eine Vorrichtung vorzuschlagen, um ein Etikett so in eine Spritzgießform zu überführen, dass das Etikett auf dem Innenumfang der Spritzgießform genau positioniert wird.

Erfindungsgemäß wird dies durch ein Verfahren gemäß Anspruch 1 und eine Vorrichtung gemäß Anspruch 4 erreicht.

Durch Aufweiten des Etiketts mittels Blasdruck und/oder durch elektrostatische Aufladung ist es auch möglich, das auf einem zylindrischen Einlegedorn in eine zylindrische Spritzgießform eingeführte Etikett nach dem Ausrichten auf dem Innenumfang der Spritzgießform genau zu positionieren.

Die Erfindung wird beispielsweise anhand der Zeichnung näher erläutert. Es zeigen
- Fig. 1: schematisch eine etwa halbzylindrische Vorform mit Aufnahmeeinrichtung,
- Fig. 2: die Vorform in perspektivischer Ansicht mit darin aufgenommenem Etikett,
- Fig. 3: in perspektivischer Ansicht einen Einlegedorn,
- Fig. 4: eine Ausrichteinrichtung für das Etikett auf dem Einlegedorn, und
- Fig. 5: einen Querschnitt durch den in die Spritzgießform eingesetzten Einlegedorn.

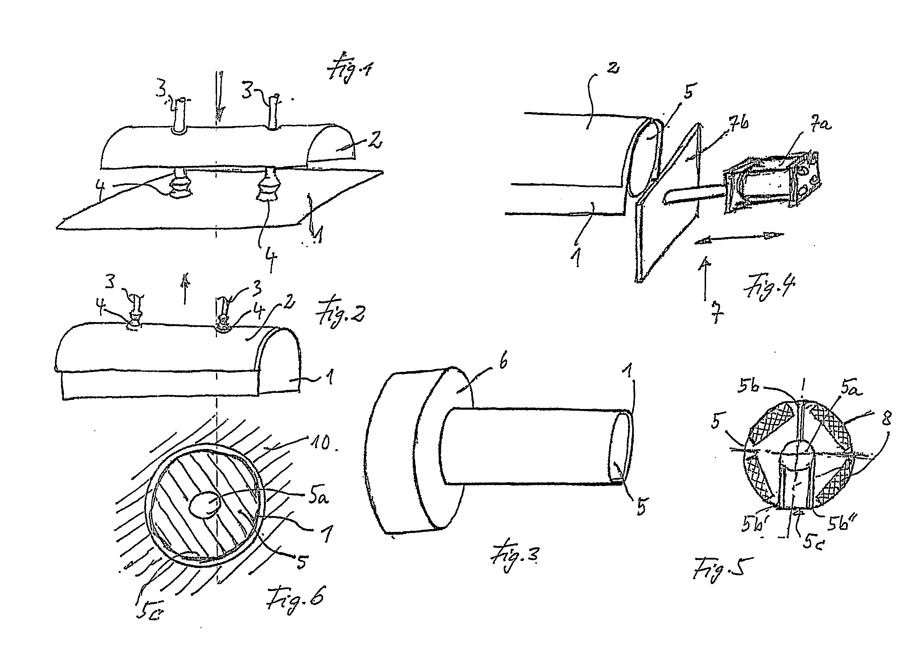

In Fig. 1 ist mit 1 ein bespielsweise auf einer planen Fläche oder auf einem Stapel aufliegendes Etikett 1 bezeichnet, das im wesentlichen eine Rechteckform hat. Mit 2 ist eine halbzylindrsiche Haube bezeichnet, durch die bei dem dargestellten Ausführungsbeispiel zwei Stempel 3 mit Saugnäpfen 4 an den Vorderenden geführt sind. In Fig. 1 sind die Stempel 3 mit den Saugnäpfen 4 relativ zu der in einem Abstand von dem Etikett 1 angeordneten Haube 2 abgesenkt, so dass sie durch Anlegen von Unterdruck das Etikett 1 aufnehmen können. Hierauf werden die Stempel 3 nach oben gezogen, wie durch einen Pfeil in Fig. 2 wiedergegeben, so dass das Etikett 1 auf dem Innenumfang der Haube 2 angelegt und etwa halbzylindrisch vorgeformt wird.

Die Haube 2 mit darin aufgenommenem Etikett 1 wird auf einen Einlegedorn 5 überführt, der im wesentlichen zylindrisch ausgebildet ist, wobei der Außendurchmesser des Einlegedorns etwas kleiner ist als der Innendurchmesser der Spritzgießform, in die das Etikett 1 überführt werden muss. Der Einlegedorn 5 weist eine Anschlagfläche 6 in Form eines Flansches oder eines ringförmigen Absatzes auf, damit das Etikett auf dem Einlegedom 5 genau positioniert werden kann.

Fig. 4 zeigt eine Ausrichteinrichtung 7 auf der Stirnseite des Einlegedorns 5, auf dem mittels der Saugnäpfe 4 und der Haube 2 das Etikett 1 aufgelegt ist. Die Ausrichteinrichtung kann beispielsweise als eine durch einen Pneumatikzylinder 7a in Achsrichtung verstellbare Platte oder Scheibe 7b ausgebildet sein, die stirnseitig gegen den vorstehenden Rand des Etiketts auf den Einlegedom 5 gedrückt wird, so dass das Etikett 1 mit der Stirnseite des Einlegedorns ausgerichtet wird. Eine andere Möglichkeit des Ausrichtens besteht darin, das Etikett durch Anlegen an dem Anschlag 6 auf dem Einlegedorn 5 so auszurichten, dass seine Seitenränder parallel zueinander liegen. Während des Anlegens der Platte 7b an der Stirnseite des Einlegedorns 5 ist der Unterdruck an den Saugnäpfen 4 der Stempel 3 abgeschaltet, so dass das Etikett 1 relativ zur Haube 2 verschoben werden kann. Die Haube 2 dient hierbei dazu, das Etikett 1 zumindest auf dem oberen Umfangsabschnitt des Einlegedorns anliegend zu halten, zu führen und dem Etikett Steifigkeit zu verleihen.

Damit das Etikett 1 auch auf dem unteren Teil des Einlegedorns 5 angelegt wird, kann eine nicht dargestellt Hilfseinrichtung vorgesehen werden, die beispielsweise in Fig. 4 von unten etwa senkrecht gegen den Einlegedom 5 verfahrbar ist, um die beiden nach unten abstehenden Ränder des Etiketts 1 auf dem Umfang des Doms 5 anzulegen. Hierzu können neben Vakuum und elektrostatischer Aufladung auch Bürsten, Rollen oder von außen angreifende Druckluft verwendet werden, um die nach unten abstehenden Ränder des Etiketts am Umfang des Doms anzudrücken.

Der Einlegedorn 5 selbst ist mit einer Halteeinrichtung vorzugsweise in der Form von Saugöffnungen auf dem Umfang versehen, damit das Etikett 1 auf dem Umfang anliegend gehalten werden kann, sobald das Etikett ausgerichtet ist und die abstehenden Ränder an den Dom angelegt sind.

Fig. 5 zeigt schematisch einen Querschnitt durch den Einlegedorn 5, der eine mittige Bohrung 5a in Achsrichtung aufweist, von der aus in radialer Richtung Kanäle 5 b zur Außenumfangsfläche führen. Bei dem dargestellten Ausführungsbeispiel verlaufen zwei Kanäle 5b' und 5b" in einem Abstand voneinander etwa parallel vom Außenumfang der Bohrung 5a nach unten, um die Ränder des Etiketts 1 durch Anlegen von Unterdruck am Dorn 5 anliegend zu halten. Ein einzelner Kanal 5b führt in diametraler Richtung nach oben zur Umfangsfläche des Doms. Die Kanäle 5b - 5b" sind jeweils in Reihe am Einlegedorn ausgebildet, um das Etikett auf seiner Länge beaufschlagen zu können.

Im Bereich der Mündungsöffnungen der beiden Kanäle 5b' und 5b" ist der Einlegedorn 5 vorzugsweise mit einer Abflachung 5c des Umfangs versehen, damit die sich überlappenden Ränder des Etiketts den Außendurchmesser des Einlegedorns nicht vergrößern und ein Einschieben in die Spritzgießform nicht behindern, deren Innendurchmesser nur geringfügig größer ist als der Außendurchmesser des Doms mit darauf anliegendem Etikett, um den Spalt zwischen Etikett und Innenumfang der Form möglichst eng zu halten, über den das Etikett auf den Innenumfang der Form überführt werden muss. Als Etikett wird üblicherweise eine Folie mit einer Stärke von 40 bis 140 µ, insbesondere 50 bis 75 µ vorgesehen und der Abstand zwischen Außenumfang des Doms und Innenumfang der Spritzgießform wird so klein wie möglich gehalten, damit nach dem Einführen des Etiketts in die Spritzgießform das Etikett durch Blasdruck vom Dom auf den Innenumfang der Spritzgießform überführt werden kann. Durch die Abflachung 5c am Umfang des Doms im Bereich der sich überlappenden Ränder des Etiketts wird eine Vergrößerung des Umfangs des Doms mit Etikett an dieser Stelle verhindert.

Beim Anliegen der Ränder des Etiketts am Dornumfang wird vorzugsweise zunächst der Rand auf einer Seite des Doms angelegt und durch die Saugöffnung des Kanals 5b' gehalten, worauf der andere Rand angelegt und durch Saugdruck gehalten wird, damit im Überlappungsbereich der Ränder diese sich beim Anlegen nicht gegenseitig behindern.

Der Dorn 5 weist vorzugsweise auf seinem Außenumfang Ladesegmente 8 auf, die um den Umfang verteilt angeordnet und elektrisch aufladbar sind, um dem auf dem Außenumfang des Einlegedorns 5 anliegenden Etikett eine elektrostatische Aufladung zu erteilen.

Durch die elektrostatische Aufladung des Etiketts wird die berührungslose Überführung des Etiketts vom Umfang des Doms auf den Innenumfang der Spritzgießform unterstützt, die durch Blasdruck am Dom durch die Kanäle 5b eingeleitet wird. Die sich überlappenden Ränder des Etiketts werden durch die Durchmesservergrößerung dabei so ausgerichtet, dass sie auf dem Innenumfang der Spritzgießform dicht nebeneinander liegen.

Anstelle der dargestellten Ladesegmente 8 kann auch eine durchgehend um den Umfang des Doms 5 vorgesehene Beschichtung vorgesehen sein, mittels der das Etikett elektrostatisch aufgeladen werden kann.

Um das Etikett vom Einlegedorn 5 mittels Bläsdruck auf die Innenumfangsfläche der Spritzgießform zu überführen, wird vorzugsweise Blasdruck zunächst über den Kanal 5b bzw. die Reihe von Blasöffnungen 5b in Fig. 5 an der den Rändern des Etiketts diametral gegenüberliegenden Stelle aufgebracht, sodass das Etikett 1 zunächst im Scheitelbereich abgehoben wird, worauf die ausströmende Druckluft nach und nach die seitlichen Bereiche des Etiketts abhebt und am Innenumfang der Spritzgießform anlegt. Es wird also unterschiedlich Blasdruck angelegt ausgehend von der Stelle der Mündung des Kanals 5b zum Abheben des Etiketts vom Einlegedorn 5, worauf die beiden seitlichen Bereiche bis zu den Rändern des Etiketts durch Blasdruck abgehoben werden.

Zur Erzielung eines über den Umfang des Einlegedorns 5 unterschiedlich wirkenden Blasdrucks können die Durchmesser der Blasöffnungen unterschiedlich ausgelegt werden, beispielsweise können die im Scheitelbereich mündenden Blasöffnungen 5b einen größeren Durchmesser haben als die übrigen auf dem Umfang mündenden Blasöffnungen 5b' und 5b", sodass der Blasdruck zunächst im Bereich dieser vergrößerten Öffnungen zur Wirkung kommt.

Je nach Größe des herzustellenden Spritzgießgegenstandes können über den Umfang des Einlegedorns 5 verteilt auch mehrere Ausblasöffnungen bzw. Reihen von Ausblasöffnungen als die in Fig. 5 Wiedergegebenen vorgesehen werden, wobei vorzugsweise Blasdruck in Abschnitten unterschiedlich über den Umfang verteilt angelegt wird.

Fig. 6 zeigt schematisch im Schnitt den in eine zylindrische Spritzgießform 10 eingesetzten Einlegedorn 5 mit auf dem Außenumfang des Domes anliegendem Etikett. Der Durchmesser des Doms 5 ist so ausgelegt, dass das Etikett nur einen geringen Abstand von der Innenumfangsfläche der Spritzgießform 10 hat. Die elektrostatische Aufladung des Etiketts kann bei der Überführung des Einlegedorns 5 in die Spritzgießform oder in der Spritzgießform erfolgen. Die Spritzgießform selbst kann auf dem Innenumfang nicht dargestellte Saugöffnungen aufweisen, durch die durch Anlegen von Unterdruck das Etikett an der Innenumfangsfläche der Spritzgießform gehalten werden kann. Nach dem Einführen des Einlegedorns 5 mit Etikett 1 in die Spritzgießform 10 wird durch einen kurzen Blasimpuls durch die Kanäle 5b des Doms 5 das Etikett 1 gegen die Innenumfangsfläche der Spritzgießform 10 gedrückt und durch die elektrostatische Aufladung und/oder durch Anlegen von Unterdruck an den Saugöffnungen in der Spritzgießform gehalten.

Hierauf wird der Einlegedom 5 aus der Spritzgießform herausbewegt, worauf das Spritzgießwerkzeug geschlossen und das Etikett 1 hinterspritzt werden kann.

Bei Verwendung einer üblichen Folie für ein Etikett 1 kann der ringförmige Abstand zwischen Außenumfangsfläche des Doms 5 und Innenumfangsfläche der Spritzgießform 10 etwa 1 mm betragen. Durch Abstoßen des Etiketts 1 in radialer Richtung vom Dom 5 und Anziehen des Etiketts auf der Innenumfangsfläche der Spritzgießform 10 ergibt sich ein berührungsloser Übergang des Etiketts 1 vom Dom 5 auf die Spritzgießform. Die elektrostatische Aufladung des Etiketts 1 durch den Dorn 5 trägt zu einer gleichmäßigen Verteilung der Anziehungskraft auf der Innenumfangsfläche der Spritzgießform 10 bei. Zusätzlich können auf dem Umfang des Doms 5 auch mehr als in Fig. 5 wiedergegebene Saug- und Blaskanäle 5b vorgesehen werden, um die Saug- und Blaswirkung besser über den Umfang des Doms zu verteilen, sodass bei der Überführung des Etiketts vom Dorn auf die Spritzgießform die Ausrichtung des Etiketts nicht beeinträchtigt wird.

Die halb zylindrische Haube 2 hat den Vorteil, dass bei der Überführung mehrerer Etiketten parallel nebeneinander der Platzbedarf dadurch verringert wird, dass durch die Haube 2 die Ränder eines Etiketts nach unten geschwenkt werden. Zugleich hat die Haube 2 den Vorteil, das Etikett beim Ausrichten auf dem Dom zu halten, zu führen und zu stabilisieren. Auch hierfür kann eine andere Einrichtung vorgesehen sein.

Die beschriebene Ausrichtung des Etiketts auf dem Einlegedom kann auch bei konisch geformten Einlegedomen angewendet werden, wobei jeweils der stirnseitige Rand des Etiketts durch die Ausrichtplatte 7b in Achsrichtung des Doms an eine Anlagefläche 6 angedrückt wird.

Wenn bei der Ausrichtung nicht die Stirnseite des Einlegedorns als Ausrichtanschlag verwendet wird, sondern eine flansch- oder absatzförmige Anschlagfläche 6 am gegenüberliegenden Ende des Doms 5, kann diese Anschlagfläche 6 auch durch Federn in Achsrichtung nachgiebig abgestützt sein.

Die als Ausführungsbeispiel halb zylindrisch wiedergegebene Führungs- und Abstützfläche für das Etikett 1 in Form der Haube 2 kann auch eine andere Form haben in Abhängigkeit von der Querschnittsform des herzustellenden Spritzgießgegenstandes. Beispielsweise kann der Einlegedom auch einen etwa quadratischen oder dreieckförmigen Querschnitt haben, sodass das das Etikett vorformende und auf dem Einlegedom anliegende Abstützelement auch eine entsprechende U- oder Winkelform haben kann.

Nach einer weiteren Ausgestaltung können die Seitenränder des Abstützelementes, beispielsweise der Haube 2, abklappbar oder verschwenkbar ausgebildet sein, sodass sie sich über einen größeren Teil des Umfangs des Einlegedorns an diesen anlegen können, wenn von außen ein Druck auf die abklappbaren Ränder der Haube 2 aufgebracht wird. Anstelle von Scharnierelementen oder dergleichen können die Ränder der Haube 2 auch elastisch ausgebildet sein.

Nach einer weiteren Ausgestaltung kann das Etikett auf dem Einlegedorn in der Weise ausgerichtet werden, dass die Einrichtung, die in Achsrichtung einen Druck auf das Etikett 1 ausübt, wie beispielsweise die Platte 7b, über eine vorgegebene Position in Richtung auf die Stirnseite des Einlegedorns 5 bewegt wird, sodass die Position der Platte 7b selbst die Ausrichtung gewährleistet, ohne dass sie an der Stirnseite des Einlegedorns 5 zum Anliegen kommt oder das Etikett 1 an der Anlagefläche 6 zur Anlage gebracht wird.

## Patentansprüche

1. Verfahren zum Überführen eines Etiketts (1) in eine Spritzgießform (10), umfassend die Schritte:
- Aufnehmen des Etiketts (1) zum Beispiel aus einem Magazin oder von einem Stapel und Überführen des Etiketts zu einem Einlegedom (5), mittels einer Haube (2), in die das Etikett aufgenommen und durch die das Etikett vorgeform wird, wobei die Querschwitts form der Haube (2) der Querschnittsform des Einlegedorus (5) entspricht,
- Anlegen des Etiketts auf dem Umfang des Einlegedorns, mittels der Haube (2),
- Ausrichten des Etiketts auf dem Einlegedom durch Anlegen einer Ausrichtkraft in Achsrichtung am Rand des Etiketts,
- Halten des Etiketts auf dem Einlegedom durch eine Halteeinrichtung bei abgenommener Haube (2), und
- Überführen des Einlegedorns (5) mit auf seinem Umfang anliegendem Etikett (1) in die Spritzgießform (10) und Aktivieren einer Halteeinrichtung in der Spritzgießform bei gleichzeitigem Deaktivieren der Halteeinrichtung am Einlegedom, so dass das Etikett vom Außenumfang des Doms (5) an den Innenumfang der Spritzgießform (10) überführt und an dieser gehalten wird, worauf der Einlegedom (5) aus der Spritzgießform (10) herausgefahren wird.

2. Verfahren nach Anspruch 1,
wobei das Etikett (1) durch Unterdruck am Einlegedorn (5) anliegend gehalten und nach dem Einführen in die Spritzgießform (10) durch Anlegen eines Blasdrucks am Einlegedom (5) an die Innenumfangsfläche der Spritzgießform überführt wird.

3. Verfahren nach Anspruch 2,
wobei das Etikett (1) vom Einlegedom (5) durch unterschiedlich über dessen Umfang verteilt wirkenden Blasdruck auf die Innenumfangsfläche der Spritzgießform überführt wird.

4. Vorrichtung zum Überführen eines Etiketts (1) in eine Spritzgießform (10), umfassend
- eine Aufnahmeeinrichtung (3,4) zum Aufnehmen und Überführen eines Etiketts (1) auf einen Einlegedom (5),
- eine Ausrichteinrichtung (7b) zum Aufbringen einer Kraft auf das Etikett in Achsrichtung auf dem Einlegedorn (5), und
- eine Halteeinrichtung (5b, 8) am Einlegedorn, um das Etikett auf dem Umfang des Einlegedorns zu halten,
**dadurch gekennzeichnet, dass** die Aufnahmeeinrichtung eine Haube (2) aufweist, in der das Etikett aufgenommen und vorgeformt wird, wobei dei Querschnittsform der Haube (2) der Querschnittsform des Einlegedorus (5) entspricht..

5. Vorrichtung nach Anspruch 4, wobei der Einlegedom (5) an dem der Stirnfläche gegenüberliegenden Ende mit einem Anschlag bzw. Flansch (6) auf dem Umfang versehen ist zur Anlage des Randes des Etiketts.

6. Vorrichtung nach Anspruch 5, wobei der Anschlag bzw. Flansch (6) am Einlegedom (5) in Achsrichtung federnd abgestützt ist.

7. Vorrichtung nach Anspruch 4, wobei ein in Achsrichtung verstellbarer Schieber (7b) zum Ausrichten des Etiketts auf dem Einlegedom vorgesehen.ist.

8. Vorrichtung nach Anspruch 4, wobei ein Führungselement zum Stabilisieren des Etiketts auf dem Einlegedom während des Ausrichtens vorgesehen ist.

9. Vorrichtung nach Anspruch 4,
wobei auf dem Umfang des Einlegedorns (5) Saug- und Blasöffnungen in einer Reihe (5b', 5b") jeweils längs der benachbarten Ränder des anliegenden Etiketts sowie wenigstens in einer Reihe (5b) diametral gegenüberliegend münden.

10. Vorrichtung nach Anspruch 4,
wobei der Einlegedom (5) zylindrisch ausgebildet ist auf seinem Umfang eine Abflachung (5c) aufweist, in deren Bereich nebeneinander liegende Saug- und Blasöffnungen (5b',5b") münden.

11. Vorrichtung nach Anspruch 4,
wobei die Haube (2) etwa halb zylindrisch geformt ist und Stempel (3) mit Saugnäpfen (4) durch die Haube (2) geführt sind, die eine Relativbewegung zur Haube (2) ausführen.

## Claims

1. Method for transferring a label (1) into an injection mould (10), comprising the steps of:
- picking up the label (1), for example, from a magazine or from a stack and transferring the label to an insertion mandrel (5) by means of a hood (2) in which the label is received and through which the label is pre-formed, wherein the cross-sectional shape of the hood (2) corresponds to the cross-sectional shape of the insertion mandrel (5),
- applying the label to the periphery of the insertion mandrel by means of the hood (2),
- aligning the label on the insertion mandrel by applying an aligning force in the axial direction at the edge of the label,
- holding the label on the insertion mandrel by means of a holding means when the hood (2) is taken off, and
- transferring the insertion mandrel (5) having label (1) abutting at the periphery thereof into the injection mould (10) and activating a holding means in the injection mould while at the same time deactivating the holding means at the insertion mandrel, so that the label is transferred from the outer periphery of the mandrel (5) to the inner periphery of the injection mould (10) and held thereat, whereupon the insertion mandrel (5) is withdrawn from the injection mould (10).

2. Method according to claim 1,
wherein the label (1) is held abutting at the insertion mandrel (5) by vacuum and, after insertion into the injection mould (10), is transferred to the inner peripheral surface of the injection mould by applying a blowing pressure at the insertion mandrel (5).

3. Method according to claim 2,
wherein the label (1) is transferred from the insertion mandrel (5) to the inner peripheral surface of the injection mould by the action of blowing pressure distributed in a differing manner over the periphery of the insertion mandrel.

4. Device for transferring a label (1) into an injection mould (10), comprising:
- a pick-up means (3, 4) for taking a label (1) and transferring the label (1) to an insertion mandrel (5),
- an aligning means (7b) for applying a force to the label in the axial direction on the insertion mandrel (5), and
- a holding means (5b, 8) at the insertion mandrel, for holding the label on the periphery of the insertion mandrel,
**characterised in that**
the pick-up means has a hood (2) in which the label is received and pre-formed, wherein the cross-sectional shape of the hood (2) corresponds to the cross-sectional shape of the insertion mandrel (5)

5. Device according to claim 4, wherein at the end opposite the front surface, the insertion mandrel (5) is provided with a stop or flange (6) on the periphery, for contact with the edge of the label.

6. Device according to claim 5, wherein the stop or flange (6) at the insertion mandrel (5) is elastically supported in the axial direction.

7. Device according to claim 4, wherein a slide (7b) which is displaceable in the axial direction is provided for aligning the label on the insertion mandrel

8. Device according to claim 4, wherein a guide member is provided for stabilising the label on the insertion mandrel during alignment.

9. Device according to claim 4,
wherein suction and blower openings in a row (5b', 5b"), in each case along the adjacent edges of the abutting label and at least in a row (5b), open out diametrically opposite each other on the periphery of the insertion mandrel (5)

10. Device according to claim 4,
wherein the insertion mandrel (5) is formed cylindrically and has a flattening (5c) on the periphery thereof, and wherein suction and blower openings (5b', 5b") adjacent each other open out in the area of the flattening

11. Device according to claim 4, wherein the hood (2) has an approximately semicylindrical shape, and plugs (3) having suction cups (4) are guided through the hood (2) and carry out a movement relative to the hood (2).

## Revendications

1. Procédé pour transférer une étiquette (1) dans un moule d'injection (10), comprenant les étapes:
- prendre l'étiquette (1), par exemple, d'un magasin ou d'une pile et transférer l'étiquette à un mandrin d'insertion (5) moyennant une calotte (2) dans laquelle l'étiquette est reçue et par laquelle l'étiquette est préformée, la forme transversale de la calotte (2) correspondant à la forme transversale du mandrin d'insertion (5),
- mettre l'étiquette sur la périphérie du mandrin d'insertion moyennant la calotte (2),
- aligner l'étiquette sur le mandrin d'insertion en exerçant une force d'alignement en direction axiale au bord de l'étiquette,
- tenir l'étiquette sur le mandrin d'insertion par un dispositif de rétention quand la calotte (2) est enlevée, et
- transférer le mandrin d'insertion (5) avec l'étiquette (1) contiguë à la périphérie du mandrin d'insertion dans le moule d'injection (10) et activer un dispositif de rétention dans le moule d'injection en désactivant simultanément le dispositif de rétention au mandrin d'insertion, afin de transférer l'étiquette de la périphérie extérieure du mandrin (5) à la périphérie intérieure du moule d'injection (10) et de tenir l'étiquette contre ce moule d'injection, après quoi le mandrin d'insertion (5) est retiré du moule d'injection (10).

2. Procédé selon la revendication 1,
l'étiquette (1) étant tenue contiguë au mandrin d'insertion (5) sous vide et, après l'insertion dans le moule d'injection (10), étant transférée à la surface intérieure périphérique du moule d'injection en mettant une pression de soufflage au mandrin d'insertion (5)

3. Procédé selon la revendication 2,
l'étiquette (1) étant transférée du mandrin d'insertion (5) à la surface intérieure périphérique du moule d'injection en mettant une pression de soufflage distribuée de manière différante sur le mandrin d'insertion

4. Dispositif pour transférer une étiquette (1) dans un moule d'injection (10), comprenant:
- un dispositif preneur (3, 4) pour prendre une étiquette (1) et la transférer à un mandrin d'insertion (5),
- un dispositif d'alignement (7b) pour exercer une force sur l'étiquette en direction axiale sur le mandrin d'insertion (5), et
- un dispositif de rétention (5b, 8) au mandrin d'insertion pour tenir l'étiquette sur la périphérie du mandrin d'insertion,
**caractérisé en ce que**
- le dispositif preneur a une calotte (2) dans laquelle l'étiquette est reçue et préformée, la forme transversale de la calotte (2) correspondant à la forme transversale du mandrin d'insertion (5).

5. Dispositif selon la revendication 4,
dans lequel au bout opposé à la surface frontale, le mandrin d'insertion (5) est muni d'un arrêt ou d'une bride (6) sur la périphérie pour un contact avec le bord de l'étiqueté.

6. Dispositif selon la revendication 5,
l'arrêt ou la bride (6) au mandrin d'insertion (5) étant supporté ou supportée de manière élastique en direction axiale.

7. Dispositif selon la revendication 4,
un coulisseau (7b) qui est déplaçable en direction axiale étant fourni pour aligner l'étiquette sur le mandrin d'insertion

8. Dispositif selon la revendication 4,
un élément de guidage étant fourni pour stabiliser l'étiquette sur le mandrin d'insertion pendant l'alignement

9. Dispositif selon la revendication 4,
des orifices d'aspiration et de soufflage sur la périphérie du mandrin d'insertion (5) s'ouvrant de manière diamétralement opposée, en rang (5b', 5b"), chaque fois le long des bords avoisinants de l'étiquette contiguë et au moins en rang (5b).

10. Dispositif selon la revendication 4,
le mandrin d'insertion (5) étant formé de manière cylindrique et ayant sur sa périphérie un méplat (5c), dans la zone duquel des orifices d'aspiration et de soufflage (5b', 5b") s'ouvrent.

11. Dispositif selon la revendication 4,
la calotte (2) ayant une forme approximativement demi-cylindrique, et des bouchons (3) avec des ventouses (4) étant guidés à travers la calotte (2) et effectuant un mouvement par rapport à la calotte (2).
